# EUROPEAN PATENT APPLICATION

(11) **EP 4 668 106 A1**
(43) Date of publication of application: **24.12.2025**
(21) Application number: 24777486.2
(22) Date of filing: 29.01.2024
(51) Int. Cl.: G06F 8/70

(54) **METHOD FOR APPLICATION PROGRAM INTERFACE SECURITY MANAGEMENT AND API MANAGEMENT PLATFORM**

(30) Priority: 27.03.2023 CN 202310308939
(71) Applicant: Huawei Cloud Computing Technologies Co., Ltd., Guiyang, Guizhou 550025 (CN)
(72) Inventor: MAO, Zhewen, Guiyang, Guizhou 550025 (CN); LI, Fenglong, Guiyang, Guizhou 550025 (CN); YE, Yida, Guiyang, Guizhou 550025 (CN)
(74) Representative: Goddar, Heinz J.
(86) International application number: PCT/CN2024/074440
(87) International publication number: WO 2024/198691

(57) **Abstract**

Embodiments of this application provide an application programming interface API security management method and an API management platform. The method includes: obtaining security information of a target data resource to be accessed through a target API; determining, based on the security information of the target data resource, a security measure, for the target data resource, corresponding to a part or all of a plurality of phases of a target API full lifecycle; taking the corresponding security measure for the target data resource in the part or all of the phases, and obtaining a check result of the security measure corresponding to the part or all of the phases; and taking an adjusted security measure for the target data resource in a second phase based on a check result of a security measure in a first phase, to perform security detection or security protection on the target data resource in the second phase. In the technical solutions of this application, security management is performed on a data resource in an API full lifecycle, so that security and reliability of accessing the data resource through an API are improved.

## Description

This application claims priority to Chinese Patent Application No. 202310308939.3, filed with the China National Intellectual Property Administration on March 27, 2023, and entitled "APPLICATION PROGRAMMING INTERFACE SECURITY MANAGEMENT METHOD AND API MANAGEMENT PLATFORM", which is incorporated herein by reference in its entirety.

### TECHNICAL FIELD

Embodiments of this application relate to the field of application programming interface (application programming interface, API) security, and more specifically, to an application programming interface API security management method and an API management platform.

### BACKGROUND

In the digital era, APIs have emerged as a competitive edge source for numerous enterprise technologies and economic models. APIs are not only applicable to digital scenarios such as cloud services, internet of things, and big data analysis, but also instrumental in customer acquisition, retention, and fostering innovative service ecosystems. As the immense value of APIs become evident, they have increasingly become prime targets for cyber attackers who exploit them to gain unauthorized access to enterprise application data, leading to an exponential rise in API-related attacks.

However, currently, the circulation and interaction of data resources across enterprises and with users heavily relay on APIs, which poses significant risks of API data leakage.

### SUMMARY

Embodiments of this application provide an application programming interface API security management method and an API management platform, so that security management is performed on a data resource in a part or all of a plurality of phases of an API full lifecycle, thereby improving security and reliability of accessing the data resource through an API.

According to a first aspect, an application programming interface API security management method is provided. The method is applied to an API management platform, and the method includes: The API management platform obtains security information of a target data resource to be accessed through a target API, where the security information of the target data resource is used to describe security classification of the target data resource in a data security dimension; the API management platform determines, based on the security information of the target data resource, a security measure, for the target data resource, corresponding to a part or all of a plurality of phases of a target API full lifecycle, where the plurality of phases of the target API full lifecycle include at least two of a design phase, a development phase, a test phase, a registration management phase, and a running phase; the API management platform takes the security measure corresponding to the part or all of the phases for the target data resource in the part or all of the phases, and obtains a check result of the security measure corresponding to the part or all of the phases; the API management platform adjusts, based on a check result of a security measure for the target data resource in a first phase, a security measure corresponding to the target data resource in a second phase, where the first phase and the second phase are separately one of the plurality of phases; and the API management platform takes an adjusted security measure for the target data resource in the second phase, to perform security detection or security protection on the target data resource in the second phase.

According to the technical solutions provided in this application, the security measures of the target data resource in the plurality of phases of the API full lifecycle are determined based on the security information of the target data resource, so that security and reliability of the target data resource in the API full lifecycle are implemented.

With reference to the first aspect, in some implementations of the first aspect, the adjusted security measure include a remedy measure for addressing a security issue of the target data resource in the second phase and/or a protective measure for safeguarding the target data resource against a security risk in the second phase.

According to the technical solutions provided in this application, the security measure for addressing the security issue or the security measure for protecting against the security risk is added, so that data leakage in the plurality of phases of the API full lifecycle is reduced, and security and reliability of the API full lifecycle are implemented.

With reference to the first aspect, in some implementations of the first aspect, the security measure corresponding to the part or all of the phases includes at least one of the following: adding, in the design phase, a security field related to the security information of the target data resource to a description file of the target API; performing, in the development phase, consistency check on the security information of the target data resource and code corresponding to the security measure corresponding to the part or all of the phases; checking, in the test phase by executing a test case, a security issue existing when the target data resource is accessed through the target API, where the test case is designed based on the security information of the target data resource; identifying and marking, in the registration management phase, the target data resource based on the security information of the target data resource; and identifying and monitoring, in the running phase, an inbound/outbound security status of the target data resource based on the security information of the target data resource.

According to the technical solutions provided in this application, targeted measures are taken in the plurality of phases of the API full lifecycle to ensure data security of accessing the data resource through the API, thereby preventing API data leakage from a root cause.

With reference to the first aspect, in some implementations of the first aspect, the security information of the target data resource includes one or more security level values corresponding to the target data resource, and the security level value corresponding to the target data resource is used to describe security classification of the target data resource in a data sensitivity dimension.

According to the technical solutions provided in this application, the security level value is used to describe the security classification in the data security dimension, so that data classification is clearer and easier to identify.

With reference to the first aspect, in some implementations of the first aspect, the one or more security level values correspond to one or more security labels, the one or more security labels include any one or more of a data label, a desensitization label, and an encryption label, the data label describes a level of importance of the target data resource, the desensitization label specifies whether the target data resource requires desensitization processing, and the encryption label specifies whether the target data resource requires encryption processing; and that the API management platform takes the security measure corresponding to the part or all of the phases for the target data resource includes any one or more of the following: taking one or more protective measures for the target data resource, where the one or more protective measures are determined based on a security level value corresponding to the data label of the target data resource; performing desensitization processing on the target data resource based on a security level value corresponding to the desensitization label of the target data resource, where the security level value corresponding to the desensitization label of the target data resource is greater than or equal to a first threshold; and performing encryption processing on the target data resource based on a security level value corresponding to the encryption label of the target data resource, where the security level value corresponding to the encryption label of the target data resource is greater than or equal to a second threshold.

According to the technical solutions provided in this application, the plurality of security level values are introduced and classified based on the security label, so that there are more types of security measures, and targeted security measures can be taken based on different security level values.

With reference to the first aspect, in some implementations of the first aspect, data resources to be accessed through the target API include K data resources, the K data resources include the target data resource, the security information of the target data resource further includes a security level value corresponding to the target API, and the security level value corresponding to the target API is determined based on security level values corresponding to the K data resources; and that the API management platform determines, based on the security information of the target data resource, the security measure, for the target data resource, corresponding to the part or all of the plurality of phases of the target API full lifecycle includes: The API management platform determines, based on the security level value corresponding to the target API, the security measure, for the target data resource, corresponding to the part or all of the plurality of phases of the target API full lifecycle.

According to the technical solutions provided in this application, a same security measure is performed for a plurality of data resources to be accessed through the target API in the plurality of phases of the API full lifecycle, thereby avoiding a waste of security protection resources.

With reference to the first aspect, in some implementations of the first aspect, the security level value corresponding to the target API is determined based on a largest value in the security level values corresponding to the K data resources.

According to the technical solutions provided in this application, the same security measure is determined based on a largest value in security level values corresponding to the plurality of data resources to be accessed through the target API, so that the same security measure can protect all data resources in the plurality of data resources.

According to a second aspect, an API management platform is provided. The API management platform includes: an obtaining module, configured to obtain security information of a target data resource to be accessed through a target API, where the security information of the target data resource is used to describe security classification of the target data resource in a data security dimension; and a processing module, configured to: determine, based on the security information of the target data resource, a security measure, for the target data resource, corresponding to a part or all of a plurality of phases of a target API full lifecycle, where the plurality of phases of the target API full lifecycle include at least two of a design phase, a development phase, a test phase, a registration management phase, and a running phase, take the security measure corresponding to the part or all of the phases for the target data resource in the part or all of the phases, and obtain a check result of the security measure corresponding to the part or all of the phases, where the processing module is further configured to: adjust, based on a check result of a security measure for the target data resource in a first phase, a security measure corresponding to the target data resource in a second phase, where the first phase and the second phase are separately one of the plurality of phases, and take an adjusted security measure for the target data resource in the second phase, to perform security detection or security protection on the target data resource in the second phase.

With reference to the second aspect, in some implementations of the second aspect, the adjusted security measure includes a remedy measure for addressing a security issue of the target data resource in at least one second phase and/or a protective measure for safeguarding the target data resource against a security risk in at least one second phase.

With reference to the second aspect, in some implementations of the second aspect, the security measure corresponding to the part or all of the phases includes at least one of the following: adding, in the design phase, a security field related to the security information of the target data resource to a description file of the target API; performing, in the development phase, consistency check on the security information of the target data resource and code corresponding to one or more security measures corresponding to the plurality of phases; checking, in the test phase by executing a test case, a security issue existing when the target data resource is accessed through the target API, where the test case is designed based on the security information of the target data resource; identifying and marking, in the registration management phase, the target data resource based on the security information of the target data resource; and identifying and monitoring, in the running phase, an inbound/outbound security status of the target data resource based on the security information of the target data resource.

With reference to the second aspect, in some implementations of the second aspect, the security information of the target data resource includes one or more security level values corresponding to the target data resource, and the security level value corresponding to the target data resource is used to describe security classification of the target data resource in a data sensitivity dimension.

With reference to the second aspect, in some implementations of the second aspect, the one or more security level values correspond to one or more security labels, the one or more security labels include any one or more of a data label, a desensitization label, and an encryption label, the data label describes a level of importance of the target data resource, the desensitization label specifies whether the target data resource requires desensitization processing, and the encryption label specifies whether the target data resource requires encryption processing; and taking the security measure corresponding to the part or all of the phases for the target data resource includes any one or more of the following: taking one or more protective measures for the target data resource, where the one or more protective measures are determined based on a security level value corresponding to the data label of the target data resource; performing desensitization processing on the target data resource based on a security level value corresponding to the desensitization label of the target data resource, where the security level value corresponding to the desensitization label of the target data resource is greater than or equal to a first threshold; and performing encryption processing on the target data resource based on a security level value corresponding to the encryption label of the target data resource, where the security level value corresponding to the encryption label of the target data resource is greater than or equal to a second threshold.

With reference to the second aspect, in some implementations of the second aspect, data resources to be accessed through the target API include K data resources, the K data resources include the target data resource, the security information of the target data resource further includes a security level value corresponding to the target API, and the security level value corresponding to the target API is determined based on security level values corresponding to the K data resources; and the processing module is specifically configured to determine, based on the security level value corresponding to the target API, the security measure, for the target data resource, corresponding to the part or all of the plurality of phases of the target API full lifecycle.

With reference to the second aspect, in some implementations of the second aspect, the security level value corresponding to the target API is determined based on a largest value in the security level values corresponding to the K data resources.

According to a third aspect, a computing device is provided, including a processor and a memory. The memory is configured to store instructions, and the processor is configured to execute the instructions stored in the memory, so that the computing device performs the method in any one of the first aspect or the possible implementations of the first aspect.

According to a fourth aspect, a computing device cluster is provided, including at least two computing devices. Each computing device includes a processor and a memory, the memory is configured to store instructions, and the processor is configured to invoke the instructions from the memory and run the instructions, so that the computing device cluster performs the method in any one of the first aspect or the possible implementations of the first aspect.

Optionally, the processor may be a general-purpose processor, and may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a fifth aspect, a chip is provided. The chip obtains instructions and executes the instructions to implement the method in any one of the first aspect or the possible implementations of the first aspect.

Optionally, in an implementation, the chip includes a processor and a data interface. The processor reads, through the data interface, instructions stored in a memory, to perform the method in any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method in any one of the first aspect or the possible implementations of the first aspect.

According to a sixth aspect, a computer program product including instructions is provided. When the instructions are run by a computing device or a computing device cluster, the computing device or the computing device cluster is caused to perform the method in any one of the first aspect or the possible implementations of the first aspect.

According to a seventh aspect, a computer-readable storage medium is provided, including computer program instructions. When the computer instructions are executed by a computing device or a computing device cluster, the computing device or the computing device cluster is caused to perform the method in any one of the first aspect or the possible implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

### BRIEF DESCRIPTION OF DRAWINGS

FIG. 1 is a diagram of a system based on a cloud server system according to an embodiment of this application;
FIG. 2 is a block diagram of an API full lifecycle according to an embodiment of this application;
FIG. 3 is a flowchart block diagram of an API security management method according to an embodiment of this application;
FIG. 4 is a diagram of an example of an API security management method according to an embodiment of this application;
FIG. 5 is a block diagram of a structure of an API management platform according to an embodiment of this application;
FIG. 6 is a block diagram of a structure of a computing device according to an embodiment of this application;
FIG. 7 is a block diagram of a structure of a computing device cluster according to an embodiment of this application; and
FIG. 8 is a block diagram of a structure of another computing device cluster according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

Unless otherwise stated, meanings of all technical and scientific terms used in embodiments of this application are the same as those usually understood by persons skilled in the technical field of this application. The terms used in this application are merely intended to describe objectives of the specific embodiments, and are not intended to limit the scope of this application.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. Persons of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

With continuous development of an enterprise internetization process, more and more services are migrated to the internet. A large quantity of service interactions and external services cause an enterprise or a team to use an application programming interface (application programming interface, API) in a large quantity. APIs are predefined functions. An application encapsulates its service capability into an API and opens it to a user to invoke.

There are various reasons for using the API, including extracting data from a database, sending and saving data to a database, and pushing a task to a queue. However, a main purpose of the API is to help a user interact with an application in an automated manner by using a program or script program. When operating in a virtual environment without API support, each step needs be manually invoked by the user. Therefore, the API becomes a key component of the service.

The API is not only applicable to digital scenarios such as a cloud service, the internet of things, and big data analysis, but also helps an enterprise explore and maintain customers and build a brand-new service ecosystem. For example, the cloud service includes a plurality of cloud applications or cloud products, and a developer may develop a cloud API, to provide service interfaces of various resources of a cloud application or a cloud product for a tenant. The cloud API is easy to be automated and remotely invoked, and have high compatibility and a low requirement on a system. The tenant can directly invoke the cloud API on a cloud platform to improve invoking efficiency of a frequently used function.

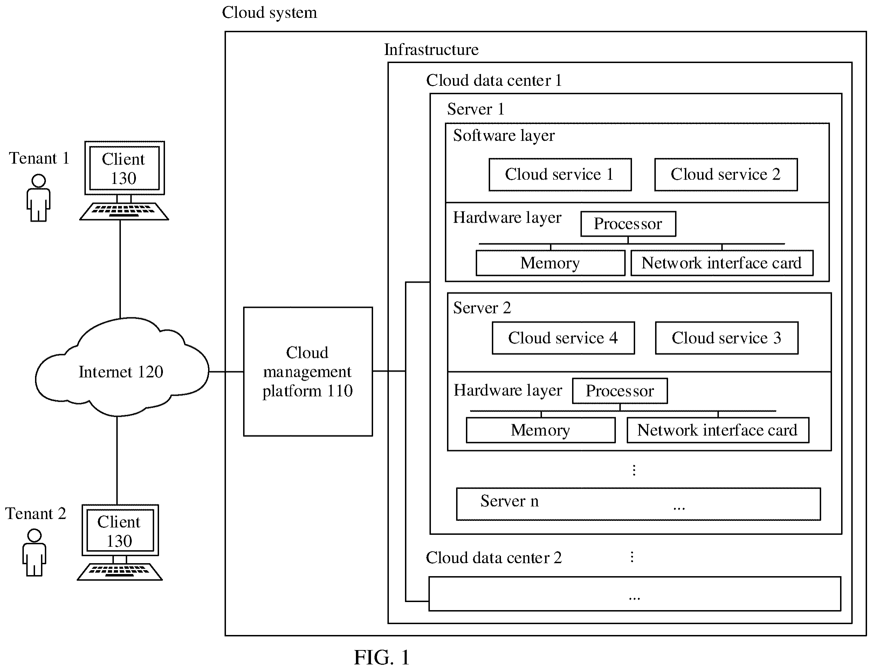

For ease of understanding a cloud environment, FIG. 1 is a diagram of a system based on a cloud server system. As shown in FIG. 1, a cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 110 provides an access interface (for example, an interface or an application programming interface (application programming interface, API)). The tenant may operate a client remote access interface to register a cloud account and a password on the cloud management platform, and log in to the cloud management platform. After the cloud account and the password are successfully authenticated by the cloud management platform, the tenant can further pay to select and purchase a virtual machine of a specific specification (processor, memory, or disk) on the cloud management platform. After the purchasing with payment succeeds, the cloud management platform provides a remote login account and password of the purchased virtual machine, and the client can remotely log in to the virtual machine, and install and run an application of the tenant on the virtual machine. The tenant of the cloud service may be an individual, an enterprise, a school, a hospital, an administration, or the like.

Functions of the cloud management platform 110 include but are not limited to a user console, a computing management service, a network management service, a storage management service, an authentication service, and an image management service. The user console provides the interface or the API to interact with the tenant. The computing management service is used for managing a bare metal server and a server running a virtual machine and a container. The network management service is used for managing a network service (such as a gateway and a firewall). The storage management service is used for managing a storage service (such as a data bucket service). The authentication service is used for managing an account and a password of the tenant. The image management service is used for managing a virtual machine image. The tenant may use a client 130 to log in to the cloud management platform 110 over the internet 120 to manage a rented cloud service.

For example, in this embodiment of this application, the tenant may invoke a cloud API via the cloud management platform, or may implement complete API full lifecycle management by using an API gateway service or an API management application provided by the cloud management platform.

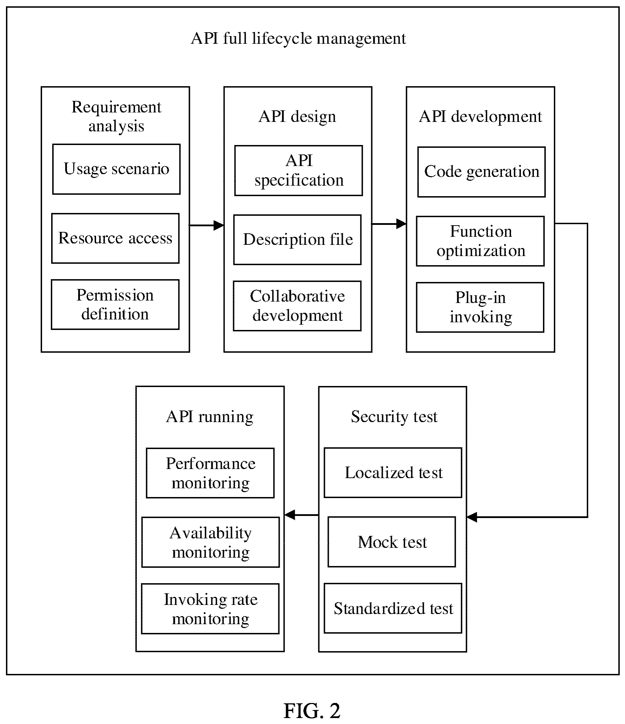

The API is an application interface with a service capability. Therefore, the API is the same as the application, and also has processes such as design and test. In other words, the API also has a lifecycle process from requirement design, research and development, to rollout. To implement API standard management and API efficient development, an enterprise or a research and development team usually uses an API management platform to manage a plurality of phases of an API full lifecycle. The API full lifecycle includes at least API design, API development, API test, API running, and another phase. FIG. 2 is a block diagram of an API full lifecycle according to this application, including five phases: requirement analysis, security design, API development, security test, and API running.

It should be noted that the API full lifecycle in FIG. 2 is merely an example provided in this embodiment of this application, and does not limit the protection scope of this application. The API full lifecycle may also include another phase, for example, a registration management phase, and a management and operations and maintenance phase. For example, a user or a tenant may perform operations such as viewing, bringing offline, copying, modifying, or deleting a target API in the management and operations and maintenance phase, or may monitor a user usage status of the target API to implement traffic management, or may perform operations such as extending and updating the target API after the target API is brought offline, to improve a service value of the target API.

The following specifically describes content of the plurality of phases of the API full lifecycle included in FIG. 2. For ease of description and consideration that the API is applicable to a plurality of digital scenarios such as a cloud service, the internet of things, and big data analysis, an enterprise, a design team, and a developer or management and operations and maintenance personnel that manage the plurality of phases of the API full lifecycle are collectively referred to as "a user or a tenant" below.

In the requirement analysis phase, the user or the tenant may determine a requirement of the target API, for example, determine an actual usage scenario of the target API, input parameters of the target API, a value range of each input parameter, a return value of the target API, data resources that can be accessed through the target API, and authentication and permission definition of the target API. For another example, the developer may also determine a service, function, or specific service requirement related to a service aspect of the API.

In the API design phase, the user or the tenant may generate an API specification based on the requirement, of the target API, determined in the requirement analysis phase. The API specification can describe a method, an operation, or any technical constraint supported by the interface and output as an interface definition description file. The developer can clarify content, in the interface definition description file, such as a function, a name, and a property (a function service, data exchange, file exchange, and the like) of the target API, input parameters and data types of the interface function, and a type of returned result data. Based on a high-quality interface definition description file, a frontend developer and a backend developer can efficiently collaborate with each other to improve version iteration efficiency.

In the API development phase, the user or the tenant can perform internal service logic design of the target API based on the interface definition description file in the security design phase, that is, design code of the target API. Currently, the developer can use a plug-in with a specific function to implement personalized development of the target API. For example, the developer transfers the interface definition description file to a code repository, and a code automatic generation plug-in may automatically generate framework code of the target API based on content in the description file. Based on this development mode, when a new version is developed, a function is iterated or optimized, the developer only needs to update the interface definition description file to automatically generate project code or an API interface document.

In the security test phase, the user or the tenant can generate a test case based on data construction and use the test case to perform localized test, mock (mock) test, and another test method on the target API. For example, the developer can perform arrangement and combination based on definition of the target API in the interface definition description document and automatically generate test cases for various situations such as a boundary value, an exception type, and parameter missing, to check whether the target API meets a basic performance requirement.

In the API running phase, the user or the tenant can monitor parameters such as performance, availability, and an invoking amount of the target API during running, helping the developer or management personnel analyze interface details and indicators from a technical layer and a service layer to ensure that interface performance and availability meet requirements.

In some other embodiments of this application, the plurality of phases of the API full lifecycle may be separately managed by using a plurality of components of the API management platform. For example, corresponding to FIG. 2, the API management platform may include a requirement analysis component, an API design component, a development component, a test component, a running component, a management and operations and maintenance component, and the like.

Although API full lifecycle management can improve internal and external cooperation efficiency or cross-department collaboration of an enterprise, the enterprise or a research and development team has a heavy security burden on API development. For example, the user or the tenant determines, in the requirement analysis phase, that a sensitive data resource is required to be accessed through the target API, and the sensitive data resource may have risks of injection attack, data leakage, parameter tampering, and the like in the API running phase. For another example, the user or the tenant uses framework code in the API development phase, and the framework code only includes a process of obtaining a data resource by the target API. In this case, when the API is obtaining or transmitting the data resource, the data resource has a risk of being crawled. However, most monitoring methods in the API running phase consider only performance during API running, but do not consider the data resource. Therefore, the enterprise or the research and development team needs to optimize and monitor the API to improve performance, reliability, and security of the API.

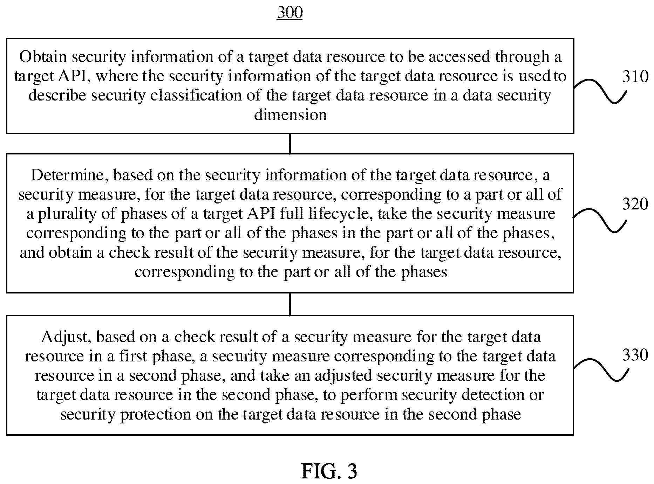

To resolve the foregoing problems of API data security and API information leakage, this application provides an API full lifecycle security management method 300. Based on a data resource accessed through an API, targeted measures are taken in a plurality of phases of an API full lifecycle to ensure data security of the API. FIG. 3 is a diagram of the API full lifecycle security management method 300. The method 300 includes Step 310, Step 320, and Step 330. The method 300 can not only improve availability, reliability, usability, and overall response performance of the API, but also improve security of accessing the data resource through the API from a source of the data resource of the API.

Optionally, the method 300 may be applied to an API management platform or a cloud management platform 110. For example, the method 300 may be implemented by using an API gateway service or an application provided by the cloud management platform 110.

Step 310: Obtain security information of a target data resource to be accessed through a target API, where the security information of the target data resource is used to describe security classification of the target data resource in a data security dimension.

It should be understood that the target data resource is a data resource to be accessed through the target API. In other words, the target data resource may be a data resource that may be accessed through the target API and that is determined by a user or a tenant in a requirement analysis phase. The security information of the target data resource is used to describe a type of security classification of the target data resource in one or more data security dimensions. For example, the data resource may be application service data in an application domain dimension, or confidential data in a data sensitivity dimension. The following describes in detail the security information and security classification of the data resource. Details are not described herein.

A manner of obtaining the security information of the target data resource may be obtaining a target data resource that is entered by the user or the tenant and target data security information, or may be obtaining a target data resource that is entered by the user or the tenant, and then determining security information of the target data resource based on security information of all data resources stored in a database or a data cache. An obtaining manner is not limited in this application.

Step 320: Determine, based on the security information of the target data resource, a security measure, for the target data resource, corresponding to a part or all of a plurality of phases of a target API full lifecycle, take the security measure corresponding to the part or all of the phases for the target data resource in the part or all of the phases, and obtain a check result of the security measure, for the target data resource, corresponding to the part or all of the phases.

It should be understood that security measures corresponding to the plurality of phases of the target API full lifecycle are determined based on the security information of the target data resource. In other words, security measures, for target data resources of different data types, corresponding to the plurality of phases of the target API full lifecycle may be different. These security measures can be used for comprehensive check or monitoring on the target data resource in the plurality of phases of the target API full lifecycle, and check, from the source of the data resource of the target API, a security issue that occurs in the data resource or a possible security risk that may exist in the data resource, that is, the check result of the security measure. The following describes in detail a security measure corresponding to each of the plurality of phases. Details are not described herein.

Step 330: Adjust, based on a check result of a security measure for the target data resource in a first phase, a security measure corresponding to the target data resource in a second phase, and take an adjusted security measure for the target data resource in the second phase, to perform security detection or security protection on the target data resource in the second phase.

It should be understood that the check result of the security measure may include a check result obtained by taking the security measure to check a possible security risk or an existing security issue of the target data resource. When the check result in the first phase in the plurality of phases includes information such as a security issue, a security warning, a repair suggestion, or an adjustment suggestion, the security measure corresponding to the second phase in the plurality of phases may be adjusted to a more comprehensive and reliable security measure.

The first phase and the second phase may be a same phase or different phases. In other words, a check result of a security measure corresponding to each phase can not only have a repairing function in this phase, but also have a feedback or guidance function in another phase. For example, if the security issue in the first phase points to one or more security measures that are not checked in the second phase, the user may adjust the security measure in the second phase via the API management platform, for example, adding a remedy measure for addressing the security issue, adding a check measure for checking a security risk, or adding a check measure for further avoiding the security issue in one or more phases after the first phase and the second phase. Finally, the adjusted security measure is used in the second phase, so that possible data leakage of the target API is further avoided.

In the method 300, the security information of the target data resource is introduced, and targeted measures are taken in the part or all of the plurality of phases of the target API full lifecycle, so that data security can be traced in an entire process and refined security management in the full lifecycle is implemented, thereby effectively improving security and reliability of the target API.

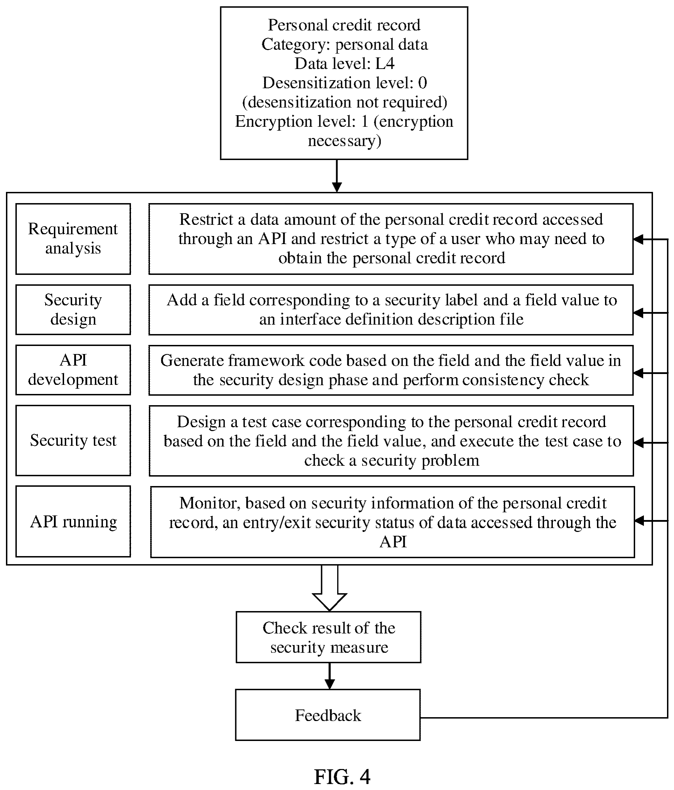

The following describes a specific process of the method 300 by using a specific embodiment provided in this application. FIG. 4 is a diagram of API full lifecycle management according to this application. An example of a target data resource shown in FIG. 4 is a personal credit record, and an example of security information is a data category, a data level, a desensitization level, and an encryption level. One or more security measures determined based on the security information of the personal credit record are also shown in a plurality of phases of an API full lifecycle. It should be noted that the target data resource, the security information of the target data resource, the plurality of phases of the API full lifecycle, and the security measures corresponding to the plurality of phases in FIG. 4 are merely examples, and are not limited in this application. In this embodiment of this application, there may be a plurality of target data resources, and each target data resource may correspond to different security information. Alternatively, the phases of the full lifecycle may include only a part of rather than all of the phases shown in FIG. 4. The following also describes other possible embodiments of the target data resource, the security information of the target data resource, the plurality of phases of the API full lifecycle, and the security measures corresponding to the plurality of phases. For ease of description, the following uses the API management platform as an execution body to manage the API full lifecycle.

First, in Step 310, the target data resource and the security information of the target data resource need to be determined.

Optionally, in some other embodiments of this application, a target data resource to be accessed through a target API may be determined based on an application field or an application scenario of the target API.

For example, the target API may be an API in the financial field. The target data resource may be identity authentication data, for example, a password or a digital signature, may be personal data of a financial customer, for example, an identity card number, a name, a financial account, or a bank card number, or may be customer data, for example, a mobile phone number, a fixed-line phone number, or an office address of a customer.

For example, the target API may be an API in the life service field, and the target data resource may be personal data of a user, for example, a name, an identity card number, or a mobile phone number, or may be real-time information data of a user, for example, a location of a mobile phone signal and a network access record. The personal credit record shown in FIG. 4 may be considered as one type of the real-time information data of the user.

For example, the target API may be an API corresponding to an application, the target data resource may be data stored in the application, and the application may also provide an application service for the user through the target API. For example, the application is a weather forecast, and the user may access, through the target API, a data resource in a weather forecast application, for example, temperature, humidity, weather, or a wind direction.

After determining data content of the target data resource, the user or a tenant needs to determine the security information of the target data resource. The security information of the target data resource is used to describe security classification corresponding to the target data resource.

As shown in FIG. 4, the target data resource may correspond to security information in a plurality of data dimensions. For example, a category in a data field dimension is personal data, and categories in a data sensitivity dimension and an importance dimension are L4 data, data that does not need to be desensitized, and data that needs to be encrypted. In some other embodiments of this application, the target data resource may correspond to only one piece of security information. For example, the personal credit record may have only one piece of security information "category: personal information". A quantity of types of security classification included in the security information is not limited in this application.

Optionally, in "category: personal data" shown in FIG. 4, a classification manner may be based on the data field. For example, the data in the foregoing three examples may be classified into financial data, user information data, and application data, or further classified into identity authentication data, personal information data, real-time data, weather data, and the like. In some other embodiments of this application, in a classification manner, data may be classified, based on a structural feature, into structured data whose data type is clearly defined, unstructured data whose data type has no unified internal structure, and semi-structured data whose data type has a basic fixed structure model. For example, pictures or videos in a plurality of formats may be classified as unstructured data. A log file, an extensible markup language (extensible markup language, XML) file, and a JavaScript object notation (JavaScript object notation, JSON) file may be classified as semi-structured data. In this embodiment of this application, a classification manner may alternatively be another method. For example, data is classified into master data and reference data based on a data type. A classification method is not limited herein.

Table 1 shows a specific method for classifying data, where various types of data resources are classified into security information such as financial data, market data, and personal data. For example, if the target data resource to be accessed through the target API is a financial statement, security information of the financial statement may be identified as financial data according to the classification method in Table 1. Similarly, security information of a personal credit report in FIG. 4 may be identified as personal data. Throughout the subsequent API full lifecycle management, data resources with different security information may correspond to different security measures. For example, security measures corresponding to financial data and consumer data may be more extensive, comprehensive, and nuanced compared to those applied to market data and macroeconomic data.

**Table 1**

| Security information of a data resource | Data resource |
|---|---|
| Financial data | Financial statement, financial report, and financial indicator |
| Market data | Stock price, transaction volume, market analysis, and investment risk |
| Personal data | Personal credit record, personal credit report, and financial behavior analysis |
| Macroeconomic data | Exchange rate and trade volume |
| ... | ... |

Optionally, in addition to the classification in data category dimension, security information may also be used to classify the data resource based on the data importance dimension or the data sensitivity dimension.

For example, Table 2 and Table 3 show other possible classification methods of the data resources in Table 1. The data resources may be classified into different data types based on value, sensitivity, or impact scope of the data. For example, data resources in Table 2 are classified into public data, confidential data, and top secret data based on confidentiality, or data resources in Table 3 are classified into in-board data, cross-border data, and the like based on the impact scope.

**Table 2**

| Security information of a data resource | Data resource |
|---|---|
| Top secret data | Financial statement, financial indicator, personal credit record, and personal credit report |
| Confidential data | Market analysis, investment risk, and financial report |
| Public data | Exchange rate, trade volume, stock price, and transaction volume |
| ... | ... |

For example, the personal credit record in Table 1 belongs to the personal data, but the personal credit record in Table 2 belongs to the top secret data. Therefore, in addition to taking security measures for the target data resource according to the classification method in Table 1, the API management platform may further take, according to the classification method in Table 2, further security measures related to data resource confidentiality behavior on the target data resource.

**Table 3**

| Security information of a data resource | Data resource |
|---|---|
| In-board data | Financial statement, financial indicator, personal credit record, and personal credit report |
| Cross-border data | Exchange rate, trade volume, stock price, and transaction volume |
| ... | ... |

For example, Table 3 shows classification of the data resources in Table 1 and Table 2 based on the impact scope. Similar to Table 2, the API management platform may add, based on Table 1 and Table 2, security measures related to the in-board data or the cross-border data in Table 3.

Optionally, based on security levels shown in FIG. 4, classification of the data resources in the data importance dimension or the data sensitivity dimension may be presented by using the security levels of the data resources. For example, the public data, the confidential data, and the top secret data mentioned above may be distinguished by using a first level, a second level, and a third level. In some other embodiments of this application, classification of security levels may be further determined based on a degree of adverse impact generated after the data resource is leaked. Table 4 shows an example of classifying and grading data resources based on security levels.

**Table 4**

| Security level | Level definition | Data resource |
|---|---|---|
| L4 | Data leakage may cause significant impact | Personal credit record, financial indicator, ... |
| L3 | Data leakage may cause serious impact | Financial statement, personal credit report, ... |
| L2 | Data leakage may cause limited impact | Financial behavior analysis, transaction volume, ... |
| L1 | Data leakage may cause slight impact | Exchange rate, trade volume, stock price, ... |

For example, it may be learned from Table 4 that the security level of the personal credit record in FIG. 4 is L4. The API management platform may take, based on the security level value corresponding to the data resource in FIG. 4, a security measure corresponding to the security level value for the data resource. For example, the four security level values L1 to L4 respectively correspond to four security measures: "No inspection necessary", "Requires thorough examination", "Needs repeated meticulous reviews", and "Demands focused inspections along with intensive monitoring".

Optionally, based on the desensitization level and the encryption level shown in FIG. 4, the security information of the data resource may also include a plurality of types of security levels, or the security information includes a plurality of security labels. Each security label corresponds to one or more security levels. The security label is used to distinguish security levels of different types. For example, the security label in FIG. 4 may be a data label, a desensitization label, and an encryption label. The data label describes a level of importance of the target data resource, the desensitization label specifies whether the target data resource requires desensitization processing, and the encryption label is used to describe whether encryption processing is performed on the target data resource. Each security label corresponds to one security level value, that is, a data level, a desensitization level, and an encryption level. A manner of determining the security level value of each security label may be similar to that in Table 4, that is, a security level of each security label corresponding to the data resource may be determined based on more tables corresponding to security labels.

Optionally, the security information of the data resource may have the foregoing plurality of classification categories, and may have only one classification category. The API management platform may determine, based on the foregoing Table 1 to Table 4, the four data categories that are of the personal credit record shown in FIG. 4 and that are included in the security information of the data resource, or may select, based on Table 1 to Table 4, one or more tables as a classification manner of determining the security information of the data resource. For example, if Table 4 has a highest weight in the four tables, the security information of the personal credit record may be determined as "L4" instead of all security information included in the four tables.

Optionally, a classification rule corresponding to the security classification may be the foregoing reuse of an existing classification manner or classification rule, may be different classification standards, such as the foregoing classification table, that are manually formulated based on different service content of the API, or may be identification and classification performed on the data resource by using technologies such as natural language processing (natural language processing, NLP), data mining, and machine learning (machine learning, ML). A process of performing the security classification is not limited in this application.

Optionally, in the classification table shown above, there may be no content in a column of the data resource but only an evaluation standard. For example, "data resource" in a third column in Table 4 may be changed to "evaluation standard", and content of "evaluation standard" may be evaluation of a leakage impact scope of the data resource. For example, when the security level is L4, an evaluation standard corresponding to L4 may be "sensitive personal data defined by law, and personal data defined in a personal financial protection technical specification". A specific representation form of the table is not limited in this application.

It should be noted that the classification manners in all the tables shown above are examples, and no limitation is imposed on the classification manners in this application. In addition, the foregoing table may be applied to not only the financial field shown in embodiments, but also the application service field.

Second, in Step 320, after determining the target data resource and the security information corresponding to the target data resource, the API management platform determines, after obtaining the target data resource and the security information corresponding to the target data resource, the security measures, for the target data resource, corresponding to the plurality of phases of the target API full lifecycle.

In this embodiment of this application, the target data resource may have corresponding security measures in all the phases of the target API full lifecycle, or may have a corresponding security measure in the part of the phases of the target API full lifecycle. This is not limited in this application. The plurality of phases of the target API full lifecycle may be several of the plurality of phases shown in FIG. 2 and FIG. 4, or may further include another phase, for example, a registration management phase, on the basis of the plurality of phases shown in FIG. 2 and FIG. 4. The following uses FIG. 4 as an example to specifically describe the security measures that may correspond to the plurality of phases of the API full lifecycle, and how to determine the security measure based on the security information of the target data resource.

Optionally, a security measure corresponding to a requirement analysis phase may include restricting a user, restricting a data resource, and the like. For example, when a target data resource that may be accessed is determined based on a usage scenario of the target API, the API full lifecycle management platform may restrict a data amount of the target data resource, to prevent an increase in a possibility of data resource leakage or a decrease in efficiency of a data security processing process caused by excessive data. For another example, when determining a potential user who may use the target data resource, the API full lifecycle management platform may specify and define permissions of all users in advance, screen out, based on strict analysis of a user category, a user who may have a network attack behavior, and authorize a user with high security to access.

For example, as shown in FIG. 4, the security measure corresponding to the personal credit record in the requirement analysis phase may be that a data amount of the personal credit record accessed through the target API is small based on "category: personal data" of the personal credit record. Therefore, the API management platform does not need to restrict the data amount of the personal credit record. If the target data resource is an enterprise credit record, and a category is "category: enterprise data", for example, credit records of all sub-companies or branches of the enterprise, the API management platform may restrict the enterprise credit record, for example, display only credit records of a half of the sub-companies or branches, so as to keep information of a part of the sub-companies or branches confidential. In addition, the API management platform may further restrict, based on a type of a user of the personal credit record and "data level: L4, encryption level: 1" in the security information, that the type of the user accessing the personal credit record is only an enterprise user related to a financial service. In this way, an individual user with a security risk is screened out.

Optionally, a security measure taken in a security design phase may be that the API management platform adds, to an interface definition description file, a field corresponding to the security information of the target data resource. For example, if the security information of the target data resource includes a data level L1, the API management platform may add, to the interface definition description file, a field "x-api-data: L1" corresponding to the security level. For another example, if the security information of the target data resource includes that the target data resource is a non-public important resource, the API management platform may add, to the interface definition description file, a field "x-api-data: non-public, important" corresponding to the security level. The security field may not only be used to describe the security information from a perspective of API design, but also be used to formulate different security measures based on different types of data resources in a subsequent phase.

For example, based on the security information of the personal credit record shown in FIG. 4, "x-api-data-type: personal data", "x-api-data-security: L4", "x-api-data-desensitization: 0", and "x-api-data-encryption: 1" may be added to the interface definition description file. A security measure in another subsequent phase may be determined based on the field information. Details are described in the following, and details are not described herein.

Optionally, a security measure taken in an API development phase may be that the API management platform automatically generates, based on code in a security code library and based on the interface definition description file in the security design phase, API framework code including content of the security measure. For the data levels L1 to L4, the API management platform may determine framework code of security protective measures respectively corresponding to L1 to L4. For the desensitization level and the encryption level, the API management platform determines framework code of corresponding security measures by determining level values corresponding to a target data packet resource. For example, the desensitization level may include three security level values: 0 (desensitization not required), 0.5 (desensitization pending), and 1 (desensitization necessary). When determining that the desensitization level of the target data resource is 1 or greater than or equal to 0.5, the API management platform determines that the target data resource needs to be desensitized, and generates framework code corresponding to the security measure "desensitization necessary". For another example, the encryption level may include three security level values: 0 (encryption not required), 0.5 (encryption pending), and 1 (encryption necessary). When determining that the encryption level of the target data resource is 1 or greater than or equal to 0.5, the API management platform determines that the target data resource needs to be encrypted, and generates framework code corresponding to the security measure "encryption necessary". In addition, the API management platform may further perform, in the API development phase, consistency check on code corresponding to the target data resource and field information corresponding to the target data resource in the interface definition description file.

For example, a security measure corresponding to "x-api-data: L4" in the personal credit record may be the foregoing "pre-check is required, and pre-test is required before access", and a security measure corresponding to "encryption level: 1" may be using one or more encryption algorithms, the API management platform adds framework code corresponding to "pre-check is required, and pre-test is required before access" and framework code corresponding to "using one or more encryption algorithms" to design code of the target API, so that the target API can automatically perform check and pre-test before access when accessing the personal credit record, and encrypt the personal credit record. Further, the framework code corresponding to the target data resource is added in the security design phase, so that the target API can perform security protection on the target data resource in advance before accessing the target data resource, thereby avoiding data leakage that occurs in a process in which the target data resource is transmitted through the target API.

Optionally, a security measure taken in a security test phase may be that the API management platform executes a test case. The test case is designed based on the security information of the target data resource. For example, a test environment of the test case is determined based on a security classification field of the target data resource, or a quantity of test steps and a test parameter of the test case are determined based on a data type of the target data resource.

For example, security information of the test case may be completely the same as the security information of the personal credit record, or a security level value included in the security information of the test case is lower than a security level value included in the security information of the personal credit record. The API management platform determines, based on an execution status of the test case accessed through the target API in a specified test environment, a specified quantity of test steps, and a specified test parameter in the security test phase, whether a security risk exists in a process in which the personal credit record is accessed through the target API. In addition, the test case in the security test phase also have the security information, and is not a test case that is randomly generated or has different parameters. Therefore, a test process is more targeted.

Optionally, a security measure taken in an API running phase may be performing, based on the data type of the target data resource, security protection or status monitoring on a process in which the target data resource is accessed through the target API. For example, if security classification of the target data resource is important data, the API management platform may perform automatic desensitization processing on the target data resource when the target data resource is accessed through the target API, and detect an inbound/outbound security status of the target data resource in the target API.

For example, since the security information of the personal credit record includes "category: personal data" and "data level: L4", the API management platform prioritizes monitoring the inbound/outbound security status of data of the personal credit record when the personal credit record is accessed through the target API, for example, displaying real-time traffic fluctuations of the personal credit record, alerting to significant traffic shifts, or highlighting both inbound and outbound states of the personal credit record.

In this embodiment of this application, the plurality of phases of the API full lifecycle and the security measures corresponding to the plurality of phases are not limited to the foregoing descriptions. For example, the API full lifecycle may further include a registration management phase used for authentication. A security measure corresponding to the registration management phase may be identifying and marking a target data resource accessed in a registration process, and marked content may be a security level value of the target data resource. For another example, the security measure corresponding to the API running phase may also be performing traffic limiting on some data resources with a high security level.

Optionally, in some other embodiments of this application, when the security information of the target data resource includes the security level value, the security information of the target data resource may further include a security level value corresponding to the target API. A data resource to be accessed through the target API may include a plurality of data resources, the plurality of data resources include the target data resource, and security information of each of the plurality of data resources includes a security level value. The security level value of the target API may be determined based on the security level values of the plurality of data resources.

For example, if the plurality of data resources to be accessed through the target API include the personal credit record, the personal credit report, and the transaction volume that are shown in Table 4, the data level of the personal credit report is L3, the desensitization level is 1, the encryption level is 0, the data level of the transaction volume is L2, the desensitization level is 1, and the encryption level is 1. In this case, the security level value of the target API may be determined based on an average value or a largest value of the security level values of the foregoing data resources. For example, it may be learned, based on the largest value, that the data level of the target API is L4, the desensitization level is 1, and the encryption level is 1. The API management platform may take security measures for all target data resources based on the security level value of the target API. For example, the desensitization level of the personal credit record is 0, but a desensitization level of the target API is 1. Therefore, the API management platform performs desensitization processing on the personal credit record based on the desensitization level of the target API. For another example, the API management platform may take inventory, vulnerability, fault, or incorrect configuration tracking and monitoring measures in different degrees on the target API based on the security level value of the target API. For example, if the security level value of the target API is determined based on the average value of security level values of the plurality of data resources, the API management platform may further trace and monitor a data resource whose security level value is higher than that of the target API.

Finally, in Step 330, the API management platform may adjust the security measure in the second phase based on the check result of the security measure in the first phase of the API full lifecycle, and take the adjusted security measure for the target data resource in the second phase, to perform security detection or security protection on the target data resource in the second phase.

Optionally, when check results of security measures in the plurality of phases of the API full lifecycle include a security issue or a security risk that exists in one or more phases, the API management platform may add a remedy measure for addressing the security issue or the security risk. A phase in which the security issue or the security risk occurs may be the same as a phase corresponding to the check result of the security measure, or may be before a phase corresponding to the check result of the security measure.

For example, in consistency check between the security field and the framework code in the API development phase, the API management platform detects that the framework code corresponding to the personal credit record is incorrectly generated. For example, a personal credit record whose data level is L4 corresponds to framework code of a security measure whose data level is L3. In this case, the API management platform may add a remedy measure corresponding to the API development phase, for example, re-generate the framework code in the API development phase, or replace the incorrect framework code.

For example, in an execution result of the test case in the security test phase, the API management platform detects that data leakage exists when the test case is accessed through the target API. For example, when the test case is accessed through the target API, data of the test case may still be crawled. In this case, the API management platform may adjust the security information of the personal credit record to a higher security level value, for example, adjust the desensitization level to 1, and correspondingly modify the security field and a field value in the security design phase. The API management platform may also add framework code corresponding to the security measure for the personal credit record in the API development phase, that is, add a protective measure that is for the personal credit record and that is taken when the personal credit record is accessed through the target API.

Optionally, check results of security measures in the plurality of phases of the API full lifecycle include may also include a security protection guidance for one or more phases. A phase in which a security measure is added or adjusted may be before a phase in which the guidance is provided, may be the phase in which the guidance is provided, or may be after the phase in which the guidance is provided.

For example, the phase in which the security measure is added or adjusted may be before the phase in which the guidance is provided, or may be the phase in which the guidance is provided. For example, a guidance provided by an inbound/outbound security status report of the personal credit record in the API running phase may be that the data amount of the personal credit record needs to be restricted, and monitoring and protection of the personal credit record need to be enhanced. According to the foregoing guidance, the API management platform can adjust a data amount threshold of the personal credit record and the user type in the requirement analysis phase, can adjust the value of the security field corresponding to the personal credit record in the security design phase, can add an attack behavior mock test for the test case in the security test phase, can add monitoring on the inbound/outbound status of the test case in the security test phase to compare with the inbound/outbound status of the personal credit record in the API running phase, and can also add the data monitoring measure taken when the personal credit record is accessed through the target API in the API running phase.

For example, the phase in which the security measure is added or adjusted may be after the phase in which the guidance is provided. For example, the guidance provided in the security test phase may be that there may be an undiscovered security risk during running of the test case. The API management platform may add or adjust the security measure in the API running phase after the security test phase, for example, add or adjust a monitored object in the API running phase, for example, a resource path used when the personal credit record is accessed through the target API or a quantity of APIs incorrectly invoked by each application.

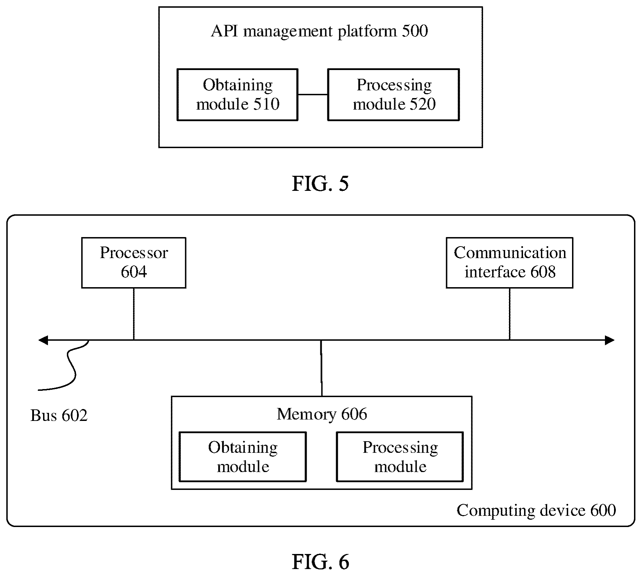

The following describes an API management platform in an embodiment of this application with reference to FIG. 5. It should be noted that the API management platform shown in FIG. 5 may perform the method shown in FIG. 3. It should be understood that the API management platform described below can perform the method in the foregoing embodiment of this application. To avoid unnecessary repetition, repeated descriptions are properly omitted when the API management platform in this embodiment of this application is described below. Optionally, the API management platform in FIG. 5 may be a cloud management platform in a cloud service.

FIG. 5 is a diagram of an API management platform according to an embodiment of this application. An API management platform 500 shown in FIG. 5 includes an obtaining module 510 and a processing module 520.

The obtaining module 510 is configured to obtain security information of a target data resource to be accessed through a target API, where the security information of the target data resource is used to describe security classification of the target data resource in a data security dimension.

Specifically, the processing module 520 is configured to: determine, based on the security information of the target data resource, a security measure, for the target data resource, corresponding to a part or all of a plurality of phases of a target API full lifecycle, where the plurality of phases of the target API full lifecycle include at least two of a design phase, a development phase, a test phase, a registration management phase, and a running phase, take the security measure corresponding to the part or all of the phases for the target data resource in the part or all of the phases, and obtain a check result of the security measure corresponding to the part or all of the phases.

Specifically, the processing module 520 is further configured to: adjust, based on a check result of a security measure for the target data resource in a first phase, a security measure corresponding to the target data resource in a second phase, where the first phase and the second phase are separately one of the plurality of phases, and take an adjusted security measure for the target data resource in the second phase, to perform security detection or security protection on the target data resource in the second phase.

For specific functions and beneficial effect of the obtaining module 510 and the processing module 520, refer to the descriptions in the foregoing embodiments. For brevity, details are not described herein again.

The foregoing modules may be implemented by using software, or may be implemented by using hardware. For example, the following uses the processing module 520 as an example to describe an implementation of the processing module 520. Similarly, for an implementation of the obtaining module 510, refer to the implementation of the processing module 520.

The module is used as an example of a software functional unit, and the processing module 520 may include code run on a computing instance. The computing instance may include at least one of a physical host (computing device), a virtual machine, and a container. Further, there may be one or more computing instances. For example, the processing module 520 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

A module is used as an example of a hardware functional unit, and the processing module 520 may include at least one computing device such as a server. Alternatively, the processing module 520 may be a device implemented using an application-specific integrated circuit (application-specific integrated circuit, ASIC) or a programmable logic device (programmable logic device, PLD) or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the processing module 520 may be distributed in a same region, or may be distributed in different regions. The plurality of computing devices included in the processing module 520 may be distributed in a same AZ, or may be distributed in different AZs. Similarly, the plurality of computing devices included in the processing module 520 may be distributed in a same VPC, or may be distributed in a plurality of VPCs. The plurality of computing devices included in the processing module 520 may be any combination of computing devices such as a server, an ASIC, a PLD, a CPLD, an FPGA, and a GAL.

This application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that, a quantity of processors and a quantity of memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 602 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to separately implement a function of the obtaining module 610 and a function of the processing module 620, so as to implement the foregoing application programming interface API security management method. In other words, the memory 606 stores instructions used to perform the foregoing application programming interface API security management method.

The communication interface 608 uses a transceiver module, for example, but not limited to, a network interface card or a transceiver, to implement communication between the computing device 600 and another device or a communication network.

An embodiment of this application further provides a computing device cluster. The computing device cluster includes at least two computing devices. The computing device may be a server, for example, a central server, an edge server, or a local server in a local data center. In some embodiments, the computing device may alternatively be a terminal device, for example, a desktop computer, a notebook computer, or a smartphone.

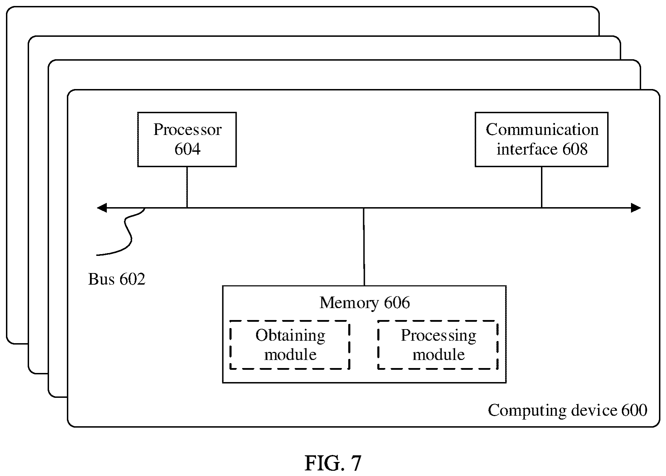

As shown in FIG. 7, the computing device cluster includes at least two computing devices 600. Memories 606 in a plurality of computing devices 600 in the computing device cluster may store a same instruction used to perform the foregoing application programming interface API security management method.

In some possible implementations, the memories 606 of the plurality of computing devices 600 in the computing device cluster may also separately store some instructions used to perform the foregoing application programming interface API security management method. In other words, a combination of one or more computing devices 600 may jointly execute instructions used to perform the foregoing application programming interface API security management method.

It should be noted that memories 606 in different computing devices 600 in the computing device cluster may store different instructions, and the different instructions are separately used to perform some functions of the foregoing apparatus. In other words, the instructions stored in the memories 606 in the different computing devices 600 may implement functions of one or more of the obtaining module and the processing module.

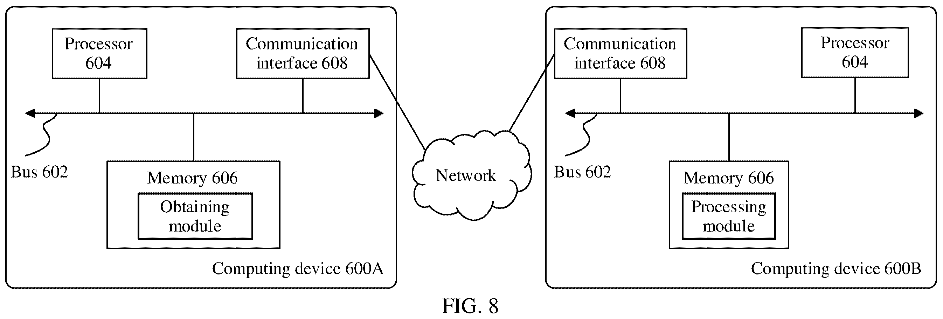

In some possible implementations, a plurality of computing devices in the computing device cluster may be connected over a network. The network may be a wide area network, a local area network, or the like. FIG. 8 shows a possible implementation. As shown in FIG. 8, two computing devices 600A and 600B are connected through a network. Specifically, the computing devices are connected to the network through communication interfaces in the computing devices. In this possible implementation, a memory 606 in the computing device 600A stores instructions for performing a function of the obtaining module. In addition, a memory 606 in the computing device 600B stores instructions for performing a function of the processing module.

It should be understood that, a function of the computing device 600A shown in FIG. 8 may alternatively be completed by a plurality of computing devices 600. Similarly, a function of the computing device 600B may alternatively be completed by a plurality of computing devices 600.

An embodiment of this application further provides a chip. The chip includes a processor and a data interface. The processor reads, through the data interface, instructions stored in a memory, to perform the foregoing application programming interface API security management method.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the foregoing application programming interface API security management method.

An embodiment of this application further provides a computer-readable storage medium. The computer-readable storage medium may be any usable medium that can be stored in a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing application programming interface API security management method.

The technical features in the foregoing embodiments may be combined in any manner. For brevity of description, not all possible combinations of the technical features in the foregoing embodiments are described. However, provided that the combinations of the technical features do not conflict with each other, it should be considered as the scope recorded in this specification.

The foregoing embodiments are merely intended to describe the technical solutions of this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of this application.

It may be clearly understood by persons skilled in the art that, for the purpose of convenient and brief description, for a detailed operating process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules is merely logical function division. There may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

Modules described as separate components may or may not be physically separate, and components displayed as modules may or may not be physical modules, to be specific, may be located at one position, or may be distributed on a plurality of network modules. Some or all the modules may be selected according to actual needs to achieve the objectives of the solutions of embodiments.

In addition, functional modules in this application may be integrated into one processing module, or each of the modules may exist alone physically, or two or more modules are integrated into one module.

When functions are implemented in the form of a software functional unit and sold or used as an independent product, the functions may be stored in a computer-readable storage medium. Based on such an understanding, the technical solutions of embodiments of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application should fall within the protection scope of this application. Therefore, the protection scope of this application shall be subject to the protection scope of the claims.

## Claims

1. An application programming interface API security management method, wherein the method is applied to an API management platform, and the method comprises:
obtaining, by the API management platform, security information of a target data resource to be accessed through a target API, wherein the security information of the target data resource is used to describe security classification of the target data resource in a data security dimension;
determining, by the API management platform based on the security information of the target data resource, a security measure, for the target data resource, corresponding to a part or all of a plurality of phases of the target API full lifecycle, wherein the plurality of phases of the target API full lifecycle comprise at least two of a design phase, a development phase, a test phase, a registration management phase, and a running phase;
taking, by the API management platform, the security measure corresponding to the part or all of the phases for the target data resource in the part or all of the phases, and obtaining a check result of the security measure corresponding to the part or all of the phases;
adjusting, by the API management platform based on a check result of a security measure for the target data resource in a first phase, a security measure corresponding to the target data resource in a second phase, wherein the first phase and the second phase are separately one of the plurality of phases; and
taking, by the API management platform, an adjusted security measure for the target data resource in the second phase, to perform security detection or security protection on the target data resource in the second phase.

2. The method according to claim 1, wherein the adjusted security measure comprises a remedy measure for addressing a security issue of the target data resource in the second phase and/or a protective measure for safeguarding the target data resource against a security risk in the second phase.

3. The method according to claim 1 or 2, wherein the security measure corresponding to the part or all of the phases comprises at least one of the following:
adding, in the design phase, a security field related to the security information of the target data resource to a description file of the target API;
performing, in the development phase, consistency check on the security information of the target data resource and code corresponding to the security measure corresponding to the part or all of the phases;
checking, in the test phase by executing a test case, a security issue existing when the target data resource is accessed through the target API, wherein the test case is designed based on the security information of the target data resource;
identifying and marking, in the registration management phase, the target data resource based on the security information of the target data resource; and
identifying and monitoring, in the running phase, an inbound/outbound security status of the target data resource based on the security information of the target data resource.

4. The method according to any one of claims 1 to 3, wherein the security information of the target data resource comprises one or more security level values corresponding to the target data resource, and the security level value corresponding to the target data resource is used to describe security classification of the target data resource in a data sensitivity dimension.

5. The method according to claim 4, wherein the one or more security level values correspond to one or more security labels, the one or more security labels comprise any one or more of a data label, a desensitization label, and an encryption label, the data label describes a level of importance of the target data resource, the desensitization label specifies whether the target data resource requires desensitization processing, and the encryption label specifies whether the target data resource requires encryption processing; and
taking, by the API management platform, the security measure corresponding to the part or all of the phases for the target data resource comprises any one or more of the following:
taking one or more protective measures for the target data resource, wherein the one or more protective measures are determined based on a security level value corresponding to the data label of the target data resource;
performing desensitization processing on the target data resource based on a security level value corresponding to the desensitization label of the target data resource, wherein the security level value corresponding to the desensitization label of the target data resource is greater than or equal to a first threshold; and
performing encryption processing on the target data resource based on a security level value corresponding to the encryption label of the target data resource, wherein the security level value corresponding to the encryption label of the target data resource is greater than or equal to a second threshold.

6. The method according to claim 4 or 5, wherein data resources to be accessed through the target API comprise K data resources, the K data resources comprise the target data resource, the security information of the target data resource further comprises a security level value corresponding to the target API, and the security level value corresponding to the target API is determined based on security level values corresponding to the K data resources; and
determining, by the API management platform based on the security information of the target data resource, the security measure, for the target data resource, corresponding to the part or all of the plurality of phases of the target API full lifecycle comprises:
determining, by the API management platform based on the security level value corresponding to the target API, the security measure, for the target data resource, corresponding to the part or all of the plurality of phases of the target API full lifecycle.

7. The method according to claim 6, wherein the security level value corresponding to the target API is determined based on a largest value in the security level values corresponding to the K data resources.

8. An API management platform, comprising:
an obtaining module, configured to obtain security information of a target data resource to be accessed through a target API, wherein the security information of the target data resource is used to describe security classification of the target data resource in a data security dimension; and
a processing module, configured to: determine, based on the security information of the target data resource, a security measure, for the target data resource, corresponding to a part or all of a plurality of phases of the target API full lifecycle, wherein the plurality of phases of the target API full lifecycle comprise at least two of a design phase, a development phase, a test phase, a registration management phase, and a running phase, take the security measure corresponding to the part or all of the phases for the target data resource in the part or all of the phases, and obtain a check result of the security measure corresponding to the part or all of the phases, wherein
the processing module is further configured to: adjust, based on a check result of a security measure for the target data resource in a first phase, a security measure corresponding to the target data resource in a second phase, wherein the first phase and the second phase are separately one of the plurality of phases, and take an adjusted security measure for the target data resource in the second phase, to perform security detection or security protection on the target data resource in the second phase.

9. The API management platform according to claim 8, wherein the adjusted security measure comprises a remedy measure for addressing a security issue of the target data resource in the second phase and/or a protective measure for safeguarding the target data resource against a security risk in the second phase.

10. The API management platform according to claim 8 or 9, wherein the security measure corresponding to the part or all of the phases comprises at least one of the following:
adding, in the design phase, a security field related to the security information of the target data resource to a description file of the target API;
performing, in the development phase, consistency check on the security information of the target data resource and code corresponding to the security measure corresponding to the part or all of the phases;
checking, in the test phase by executing a test case, a security issue existing when the target data resource is accessed through the target API, wherein the test case is designed based on the security information of the target data resource;
identifying and marking, in the registration management phase, the target data resource based on the security information of the target data resource; and
identifying and monitoring, in the running phase, an inbound/outbound security status of the target data resource based on the security information of the target data resource.

11. The API management platform according to any one of claims 8 to 10, wherein the security information of the target data resource comprises one or more security level values corresponding to the target data resource, and the security level value corresponding to the target data resource is used to describe security classification of the target data resource in a data sensitivity dimension.

12. The API management platform according to claim 11, wherein the one or more security level values correspond to one or more security labels, the one or more security labels comprise any one or more of a data label, a desensitization label, and an encryption label, the data label describes a level of importance of the target data resource, the desensitization label specifies whether the target data resource requires desensitization processing, and the encryption label specifies whether the target data resource requires encryption processing; and
taking the security measure corresponding to the part or all of the phases for the target data resource comprises any one or more of the following:
taking one or more protective measures for the target data resource, wherein the one or more protective measures are determined based on a security level value corresponding to the data label of the target data resource;
performing desensitization processing on the target data resource based on a security level value corresponding to the desensitization label of the target data resource, wherein the security level value corresponding to the desensitization label of the target data resource is greater than or equal to a first threshold; and
performing encryption processing on the target data resource based on a security level value corresponding to the encryption label of the target data resource, wherein the security level value corresponding to the encryption label of the target data resource is greater than or equal to a second threshold.

13. The API management platform according to claim 11 or 12, wherein data resources to be accessed through the target API comprise K data resources, the K data resources comprise the target data resource, the security information of the target data resource further comprises a security level value corresponding to the target API, and the security level value corresponding to the target API is determined based on security level values corresponding to the K data resources; and
the processing module is specifically configured to determine, based on the security level value corresponding to the target API, the security measure, for the target data resource, corresponding to the part or all of the plurality of phases of the target API full lifecycle.

14. The API management platform according to claim 13, wherein the security level value corresponding to the target API is determined based on a largest value in the security level values corresponding to the K data resources.

15. A computing device, comprising a processor and a memory, wherein the processor is configured to execute instructions stored in the memory, to cause the computing device to perform the method according to any one of claims 1 to 7.

16. A computing device cluster, comprising at least two computing devices each comprising a processor and a memory; and
the processors of the at least two computing devices are configured to execute instructions stored in the memories in the at least two computing devices, so that the computing device cluster performs the method according to any one of claims 1 to 7.

17. A computer program product comprising instructions, wherein when the instructions are run by a computing device, the computing device is caused to perform the method according to any one of claims 1 to 7; or
when the instructions are run by a computing device cluster, the computing device cluster is caused to perform the method according to any one of claims 1 to 7.

18. A computer-readable medium, comprising a computer program, wherein when the computer program runs on a computing device, a computer is caused to perform the method according to any one of claims 1 to 7; or
when the computer program runs on a computing device cluster, a computer is caused to perform the method according to any one of claims 1 to 7.
